# EUROPÄISCHE PATENTSCHRIFT

(11) **EP 4 316 956 B1**
(45) Veröffentlichungstag und Bekanntmachung des Hinweises auf die Patenterteilung: **25.03.2026**
(21) Anmeldenummer: 23178611.2
(22) Anmeldetag: 12.06.2023
(51) Int. Cl.: B62H 3/10, B25H 1/00, B62K 7/00

(54) **MONTAGEVORRICHTUNG FÜR EIN LASTENRAD**
MOUNTING DEVICE FOR A CARGO CYCLE
DISPOSITIF DE MONTAGE POUR ROUE DE CHARGE

(30) Priorität: 02.08.2022 DE 102022119319
(43) Veröffentlichungstag der Anmeldung: 07.02.2024
(73) Patentinhaber: Deutsche Post AG, 53113 Bonn (DE)
(72) Erfinder: ECKEL, Horst, 73105 Dürnau (DE); WEILER, Tillmann, 73540 Heubach (DE)
(74) Vertreter: Michalski Hüttermann & Partner Patentanwälte mbB

(56) Entgegenhaltungen:
- CN-U- 208 391 976
- DE-A1- 102020 121 919
- DE-U1- 202014 100 460
- GB-A- 2 280 653
- JP-U- S4 892 651
- US-A1- 2012 007 298

## Beschreibung

### Technisches Gebiet

Die Erfindung betrifft eine Montagevorrichtung für ein Lastenrad.

Zudem betrifft die Erfindung ein Verfahren zum Anheben eines Lastenrades und/oder zum Drehen des angehobenen Lastenrades um seine Längsachse mittels der obigen Montagevorrichtung.

### Hintergrund der Erfindung

Durch die Nutzung von elektrifizierten Lastenräder für den Transport von Lasten oder Personen, wie Elektrofahrräder, Cargobikes oder ähnliches ergeben sich verschiedene Vorteile, wie beispielseiweise eine höhere Durchschnittsgeschwindigkeit als bei konventionellen nicht angetriebenen Lastenrädern, wobei die Durchschnittsgeschwindigkeit im städtischen Verkehr oftmals auch höher ist, als diejenige von PKWs. Zudem ermöglichen elektrifizierte Lastenräder ein emissionsfreies Fortkommen.

Die Wartung und/oder Reparatur der Lastenräder ist allerdings aufgrund des oftmals höheren Gewichtes im Vergleich zu konventionellen insbesondere nicht elektrifizierten Zwei- oder Dreirädern anspruchsvoller. Da viele wartungsintensivere Bestandteile von Lastenrädern bodennah montiert sind, geht eine Wartung und/oder Reparatur oftmals mit der Notwendigkeit einher, das Lastenrad zu drehen. Insbesondere im Hinblick auf den bei elektrifizierten Lastenrädern in der Regel höheren Verschleiß und den damit einhergehenden kürzeren Wartungsintervallen, besteht Bedarf an Mitteln, die ein ergonomisches Reparieren und/oder Warten von Lastenrädern erleichtern.

Die DE 9015322 U1 beschreibt einen Fahrrad-Montageständer mit einem aus einem Fuß und einer zur Aufnahme eines Führungsrohres dienenden vertikal verlaufenden Stativsäule bestehenden Stativkörper, wobei am Führungsrohr eine zum Einklemmen des Fahrradrahmens ausgebildete Vorrichtung angeordnet ist, wobei der Fahrrad-Montageständer eine Verschwenkung des eingespannten Fahrrades und eine entsprechende Höhenverstellung ermöglicht.

Die Druckschrift GB 2 280 653 A betrifft eine freistehende Vorrichtung zum Sichern eines Fahrrads für Arbeiten. Die Vorrichtung umfasst einen Ständer, der zum Ändern der Höhe auf und ab verschoben werden kann, Klemmen mit drei Positionen an einer Kupplungsstange und eine weitere Kupplungsstange, die in jeder beliebigen Position um 360 Grad arretiert werden kann.

Die DE 20 2014 100 460 U1 beschreibt eine Anordnung zum Warten von Fahrrädern mit zwei separat handhabbaren Stützgestellen, wobei jedes Stützgestell je zwei zwischen einer Gebrauchsstellung und einer demgegenüber platzsparenden Transportstellung relativ zueinander bewegliche Bodenstreben aufweist, wobei das erste Stützgestell an beiden Bodenstreben je eine sich aufrecht erstreckende Laststrebe aufweist, an welcher je eine von oben zugängliche Lenkerhalterung für die Aufnahme eines Fahrradlenkers angeordnet ist, und wobei das zweite Stützgestell eine sich aufrecht erstreckende Laststrebe mit einer Rahmenhalterung für einen Fahrradrahmenabschnitt aufweist.

Die US 2012 / 007298 A1 beschreibt einen verstellbaren Fahrrad-Montageständer. Der Fahrrad-Montageständer kann einen höhenverstellbaren Pfosten umfassen, der mindestens ein erstes und ein zweites Rohrelement in teleskopischer Anordnung aufweist. Das zweite Rohrelement kann in das erste Rohrelement einsetzbar sein. Der Montageständer kann einen internen Mechanismus zum allmählichen Ausfahren und Einfahren des zweiten Rohrelements aus dem ersten Rohrelement umfassen. Der Montageständer kann eine Befestigungsvorrichtung zum Anbringen eines Fahrrads umfassen, die mit dem zweiten Rohrelement verbunden ist.

Die DE 10 2020 121 919 A1 betrifft einen Fuß-betätigbaren Fahrradmontageständer, der einen Rahmen und eine Hebevorrichtung aufweist.

Die JP S48 92651 U beschreibt einen Rahmenkopfhaken, der fest am Ende einer Rahmenstütze montiert ist, wobei die Rahmenstütze auf der linken und rechten Seite eines vorderen Fahrradständers aufgestellt ist und die Vorder- und Hinterräder eines Fahrrads vom Boden abhebt.

Die CN 208 391 976 U beschreibt eine automatische Rahmenreparatur für ein Fahrrad, das sich auf und ab bewegt, einschließlich eines Stützrahmens, eines Hebesystems und einer Klemmvorrichtung.

### Beschreibung der Erfindung

Ausgehend davon ist es Aufgabe der vorliegenden Erfindung, Maßnahmen bereitzustellen, die das Reparieren und/oder Warten von Lastenrädern und insbesondere von Lastenrädern mit hohem Gewicht erleichtern. Insbesondere sollen Maßnahmen bereitgestellt werden, die ein kraftsparendes Anheben des Lastenrades und/oder ein Drehen des Lastenrades ermöglichen.

Die Aufgabe der Erfindung wird durch die Merkmale der unabhängigen Ansprüche gelöst. Vorteilhafte Ausgestaltungen sind in den Unteransprüchen angegeben.

Demnach wird die Aufgabe gelöst durch eine Montagevorrichtung für ein Lastenrad umfassend einen ersten Befestigungsständer zum Anbringen an eine erste Seite des Lastenrades, wobei die erste Seite des Lastenrades bevorzugt eine Lenkerseite ist, und einen zweiten Befestigungsständer zum Anbringen an eine der ersten Seite gegenüberliegende zweite Seite des Lastenrades,
wobei der erste Befestigungsständer eine vertikal verlaufende erste Standsäule und eine mit der ersten Standsäule drehbar verbundene erste Tragestange umfasst, wobei die erste Tragestange Befestigungsmittel zum Befestigen der ersten Tragestange an der ersten Seite des Lastenrades umfasst, und wobei die erste Tragestange in einer Ebene parallel zu einer die erste Standsäule enthaltenden Ebene in Bezug zur ersten Standsäule drehbar ist,
wobei der zweite Befestigungsständer eine vertikal verlaufende zweite Standsäule und eine mit der zweiten Standsäule drehbar verbundene zweite Tragestange umfasst, wobei die zweite Tragestange Befestigungsmittel zum Befestigen der zweiten Tragestange an der zweiten Seite des Lastenrades umfasst, und wobei die zweite Tragestange in einer Ebene parallel zu einer die zweite Standsäule enthaltenden Ebene in Bezug zur zweiten Standsäule drehbar ist,
und wobei der zweite Befestigungsständer zum Anheben des Lastenrades ein mechanisches Getriebe umfasst und derart ausgestaltet ist, dass ein an der zweiten Tragestange befestigtes Lastenrad durch eine am zweiten Befestigungsständer durchführbaren Drehbewegung anhebbar ist.

Die Erfindung betrifft zudem ein Verfahren zum Anheben eines Lastenrades und/oder zum Drehen des angehobenen Lastenrades um seine Längsachse mittels der obigen Montagevorrichtung mit den Schritten
- Anbringen des ersten Befestigungsständers an einer ersten Seite des Lastenrades, wobei die erste Seite des Lastenrades bevorzugt eine Lenkerseite ist, durch Befestigen der Befestigungsmittel der ersten Tragestange an der ersten Seite des Lastenrades,
- Anbringen des zweiten Befestigungsständers an einer der ersten Seite des Lastenrades gegenüberliegenden zweiten Seite, durch Befestigen der Befestigungsmittel der zweiten Tragestange an der zweiten Seite des Lastenrades, und
- Anheben des Lastenrades durch Ausführen einer Drehbewegung am zweiten Befestigungsständer.

Ein Aspekt der Erfindung ist also, dass die Montagevorrichtung zwei Befestigungsständer umfasst, die mit jeweils einer Seite des Lastenrades verbindbar sind. Die zwei Befestigungsständer sind bevorzugt nicht direkt miteinander verbunden, sondern unabhängig voneinander. Dies macht die Montagevorrichtung besonders einfach transprotierbar, was von Vorteil für den mobilen Einsatz ist. Im Gegensatz zu ortsfesten Vorrichtungen, wie Hebebühnen oder Kran- und Flaschenzugvorrichtungen lässt sich die Montagevorrichtung zudem platzsparend verstauen. Bevorzugt befindet sich das Lastenrad bei Verwendung der Montagevorrichtung zwischen dem ersten und zweiten Befestigungsständer, wobei eine Längsachse des Lastenrades im Wesentlichen parallel zu einer Verbindungslinie zwischen dem ersten und dem zweiten Befestigungsständer verläuft. Zudem ist bevorzugt vorgesehen, dass der erste Befestigungsständer mit der Lenkerseite des Lastenrades verbindbar ist und der zweite Befestigungsständer mit der der Lenkerseite gegenüberliegenden Rückseite des Lastenrades. Grundsätzlich ist aber auch eine andere Konfiguration möglich, sprich dass der zweite Befestigungsständer bevorzugt mit der Lenkerseite des Lastenrades verbindbar ist und der erste Befestigungsständer bevorzugt mit der Rückseite des Lastenrades verbindbar ist. Montagevorrichtungen mit zwei Befestigungsständern haben gegenüber Montagevorrichtungen mit lediglich einem Befestigungsständer zudem den Vorteil, dass sie stabiler sind. Entsprechend können auch schwere Lastenräder gewartet werden. Weiterhin stellen beengte Platzverhältnisse kein Hinderungsgrund für die Verwendung der Montagevorrichtung dar, da beim Einsatz der Montagevorrichtung nur unwesentlich mehr Platz beansprucht wird, als das Lastenrad selbst benötigt.

Ein weiterer Aspekt der Erfindung ist, dass sich das Lastenrad mit Hilfe der Montagevorrichtung kraftsparend anheben lässt. Mit kraftsparend anheben ist vorliegend gemeint, dass für das Anheben weniger Kraft aufgewendet werden muss, im Vergleich zu einem Anheben des Lastenrades ohne Montagevorrichtung. Dies wird erreicht, indem der zweite Befestigungsständer das mechanische Getriebe umfasst und derart ausgestaltet ist, dass das Anheben des Lastenrades durch eine am zweiten Befestigungsständer durchführbaren Drehbewegung erfolgen kann. Mittels der vom Getriebe ermöglichten mechanischen Übersetzung muss für das Anheben somit weniger Kraft aufgewendet werden. Zudem hat die Drehbewegung als Antrieb den Vorteil, dass sie - wenn manuell ausgeführt - für den Nutzer in der Regel rückenschonender auszuführen ist, als eine Hebebewegung. Somit erleichtert die Montagevorrichtung ergonomisches Arbeiten. In der angehobenen Position des Lastenrades ist es zudem möglich, Funktionen des Lastenrades wie Schaltung und/oder Antrieb auf dem Lastenrad sitzend zu testen.

Zudem ist ein weiterer Aspekt der Erfindung, dass sich das an der Montagevorrichtung befestigte und angehobene Lastenrad mit Hilfe der Montagevorrichtung einfach um seine Längsachse drehen lässt. Dafür weist der erste und der zweite Befestigungsständer jeweils die mit der jeweiligen Standsäule drehbar verbundene Tragestange auf, wobei die Tragestange in der Ebene parallel zu der die Standsäule enthaltenden Ebene in Bezug zur Standsäule drehbar ist. Bevorzugt ist vorgesehen, dass die erste und/oder zweite Tragestange jeweils über eine senkrecht zur jeweiligen Standsäule verlaufende Achse drehbar gelagert ist. In der angehobenen und gedrehten Position des Lastenrades sind Reifen, Bremsen, Achsen und weitere Teile des Lastenrades leicht zugänglich, was beispielsweise den Aus- und/oder Einbau der Räder wesentlich vereinfacht.

Unter einem Lastenrad werden vorliegend nebst nicht elektrifizierten und/oder nicht motorisierten Fahrrädern mit zwei, drei oder vier Rädern, auch elektrifizierte Zwei- Drei- oder Vierräder, insbesondere E-Bikes und E-Trikes, sowie kleine motorisierte Zwei- oder Dreiräder, wie Kleinkrafträder, Mofas und/oder Mopeds verstanden.

Die Montagevorrichtung ist somit geeignet, um Reparatur und Wartungsarbeiten an Lastenrädern und besonders an schweren Lastenrädern zu erleichtern, indem ein kraftsparendes anheben des Lastenrades ermöglicht wird, und das an der Montagevorrichtung befestigte Lastenrad einfach um seine Längsachse drehbar ist. Somit wird ergonomische Arbeiten unterstützt. Zudem kann die Montagevorrichtung aufgrund der zwei unabhängig voneinander vorliegenden Befestigungsständer variabel für verschiedene Lastenräder verwendet werden und ist nicht nur auf ein Typ Lastenrad beschränkt. Ein weiterer Vorteil der Montagevorrichtung ist ihr einfacher und robuster Aufbau, so dass die Montagevorrichtung selbst wenig Wartungsaufwand erfordert und kostengünstig herstellbar ist.

Da die Montagevorrichtung ein kraftsparendes Anheben und ergonomisches Arbeiten am angehobenen und/oder gedrehten Lastenrad in aufrechter Position ermöglicht, kann somit auf ein mit einer gebückten Haltung einhergehendes, kraftaufwändiges seitliches Legen des Lastenrades und anschließendes Drehen des Lastenrades verzichtet werden. Zudem verhindert die Montagevorrichtung Beschädigungen an Schutzblechen und/oder Lenkeranbauteilen wie Bremshebel, Schaltung, Drehgriff usw., die durch das seitliche Legen entstehen können.

Bevorzugt ist vorgesehen, dass die Befestigungsmittel dazu ausgestaltet sind, mit dem Lastenrad verbunden zu werden, wobei die Befestigungsmittel bevorzugt auf das Lastenrad abgestimmt sind. Bevorzugt sind die Befestigungsmittel als U-förmige Gabeln und/oder Klemmen ausgestaltet. Diese haben den Vorteil, dass sie sich besonders einfach mit unterschiedlich ausgestalteten Lastenrädern verbinden lassen. Zudem ist bevorzugt vorgesehen, dass die Befestigungsmittel derart ausgestaltet sind, dass sie mit einer an der Lenkerseite und/oder Rückseite des Lastenrades vorhandenen Querstange verbindbar sind. Bei der Querstange handelt es sich weiter bevorzugt um eine Querstange eines vorderen und/oder hinteren Gepäckträgers des Lastenrades und/oder um eine Querstange einer Behälteraufnahme des Lastenrades. In anderen Worten umfasst also das Lastenrad bevorzugt einen vorderen und/oder hinteren Gepäckträger mit einer Querstange und/oder eine vorderen und/oder hintere Behälteraufnahme mit einer Querstange.

In Zusammenhang mit dem zweiten Befestigungsständer und dem kraftsparenden Anheben des Lastenrades sieht eine bevorzugte Weiterbildung der Erfindung vor, dass der zweite Befestigungsständer zum Anheben des Lastenrades derart ausgestaltet ist, dass die zweite Tragestange ohne sich zu drehen mittels der am zweiten Befestigungsständer durchführbaren Drehbewegung entlang einer vertikalen Achse der zweiten Standsäule verschiebbar ist. In dieser Weiterbildung wird das Anheben des Lastenrades also ermöglicht, indem die am zweiten Befestigungsständer ausgeführte Drehbewegung in eine axiale Bewegung der Tragestange umgewandelt wird, mittels derer das Lastenrad angehoben und auch wieder abgesenkt werden kann.

In Bezug zum vertikalen Versschieben der Tragestange ist gemäß einer weiteren bevorzugten Weiterbildung der Erfindung vorgesehen, dass der zweite Befestigungsständer zum Verschieben der zweiten Tragestange entlang der vertikalen Achse ein Schraubgetriebe oder Schneckengetriebe umfasst. Bevorzugt wird mittels einer Gewindespindel die Drehbewegung in die axiale Bewegung umgewandelt. Weiter bevorzugt wird ein Getriebe mit einer hohen Selbsthemmung verwendet, bevorzugt das Schneckengetriebe. Dies hat den Vorteil, dass trotz des hohen Gewichtes des angehobenen Lastenrades keine Fixiervorrichtung verwendet werden muss, um das Lastenrad in angehobenem Zustand zu halten, sondern durch die Selbsthemmung des Getriebes verhindert wird, dass die Tragestange aufgrund des Gewichtes des Lastenrades wieder vertikal nach unten verschoben wird. Die Übersetzung des Schraubgetriebes oder Schneckengetriebes führt zudem dazu, dass das Lastenrad kraftsparend angehoben werden kann.

Weiter bevorzugt ist in Zusammenhang mit der am zweiten Befestigungsständer durchführbaren Drehbewegung vorgesehen, dass der zweiten Befestigungsständer eine Aufnahmevorrichtung zur Aufnahme eines Schaubkopfes eines Akkuschraubers aufweist. Bevorzugt ist also eine Welle des Getriebes mit einem Akkuschrauber verbindbar. Derart muss die Drehbewegung zur Anhebung des Lastenrades nicht manuell vom Nutzer ausgeführt werden, sondern kann auf einfache Weise mittels eines Akkuschraubers erfolgen. Dies ist insbesondere bei geringen Steigungswinkeln der Gewindespindel vorteilhaft.

Gemäß einer alternativen bevorzugten Weiterbildung ist in Bezug zum kraftsparenden Anheben des Lastenrades vorgesehen, dass der zweite Befestigungsständer zum Anheben des Lastenrades derart ausgestaltet ist, dass die zweite Tragestange mittels der am zweiten Befestigungsständer durchführbaren Drehbewegung in der Ebene parallel zu der die zweite Standsäule enthaltenden Ebene drehbar ist, und wenigstens eines der Befestigungsmittel der zweiten Tragestange drehbar an der zweiten Tragestange montiert ist. Weiter bevorzugt ist in dieser Alternative vorgesehen, dass die zweite Tragestange nicht entlang der vertikalen Achse der zweiten Standsäule verschiebbar ist. In dieser alternativen Weiterbildung findet also keine Umwandlung der Drehbewegung in eine axiale Bewegung statt, sondern die am zweiten Befestigungsständer durchführbaren Drehbewegung führt zu der Drehbewegung der zweiten Tragestange. Zudem wird in dieser Alternative die Drehbewegung der Tragestange zum Anheben des Lastenrades genutzt. Um zu verhindern, dass das an der zweiten Tragestange befestigte Lastenrad beim Anheben selbst eine Drehung durchführt, ist wenigstens eines der Befestigungsmittel der zweiten Tragestange drehbar an der zweiten Tragestange montiert.

In diesem Zusammenhang ist zudem gemäß einer weiteren bevorzugten Weiterbildung vorgesehen, dass der zweite Befestigungsständer zum Drehen der zweiten Tragestange ein Kettengetriebe umfasst. Derart wird mittels der Übersetzung des Kettengetriebes ein kraftsparendes Anheben ermöglicht. Zur Übertragung der am zweiten Befestigungsständer durchführbaren Drehbewegung auf eine Welle des Kettengetriebes umfasst der zweite Befestigungsständer bevorzugt eine Kurbel.

In Zusammenhang mit dem ersten Befestigungsständer ist gemäß einer weiteren bevorzugten Weiterbildung der Erfindung vorgesehen, dass die erste Tragestange nicht entlang einer vertikalen Achse der ersten Standsäule verschiebbar ist, und dass die erste Tragestange derart an der ersten Standsäule montiert ist, dass ein an der senkrecht zur ersten Standsäule ausgerichteten Tragestange befestigtes Lastenrad wenigstens anteilig angehoben ist. In anderen Worten ist die Höhe der drehbar an der ersten Standsäule gelagerten ersten Tragestange also fest vorgegeben. Zudem ist bevorzugt vorgesehen, dass die Höhe der ersten Tragestange derart auf das Lastenrad abgestimmt ist, dass das Lastenrad wenigstens anteilig angehoben ist, wenn es mit der ersten Tragstange verbunden ist. Wie bereits erwähnt ist die erste Seite des Lastenrades bevorzugt die Lenkerseite. Der Schwerpunkt des Lastenrades liegt in der Regel derart, dass die Lenkerseite des Lastenrades relativ einfach manuell angehoben werden kann, so dass es auch unter ergonomischen Gesichtspunkten nicht notwendig ist, dass die erste Tragestange entlang der vertikalen Achse der ersten Standsäule verschiebbar zu sein braucht. Somit wird der Aufbau des ersten Befestigungsständers einfach und wartungsarm.

In einer alternativen Weiterbildung der Erfindung ist im Zusammenhang mit dem ersten Befestigungsständer bevorzugt vorgesehen, dass die erste Tragestange entlang der vertikalen Achse der ersten Standsäule verschiebbar ist. Bevorzugt ist in dieser Weiterbildung vorgesehen, dass der erste Befestigungsständer analog zum zweiten Befestigungsständer aufgebaut ist und eine am ersten Befestigungsständer durchführbare Drehbewegung mittels eines Getriebes mit Übersetzung in eine axiale Bewegung der ersten Tragestange umgewandelt wird, mittels derer das Lastenrad angehoben und auch wieder abgesenkt werden kann. Diese Ausgestaltung des Montageständers ist insbesondere für sehr schwere Lastenräder sowie für vierrädrige Lastenräder von Vorteil.

Wie bereits erwähnt ermöglicht die Montagevorrichtung nicht lediglich ein kraftsparendes Anheben des Lastenrades, sondern auch ein Drehen des Lastenrades um seine Längsachse. In Zusammenhang mit dem letztgenannten ist gemäß einer weiteren bevorzugten Weiterbildung der Erfindung vorgesehen, dass der erste und/oder zweite Befestigungsständer eine Kurbel zur Drehung der Tragestange umfasst.

Besonders bevorzugt ist vorgesehen, dass in der Variante, in der der zweite Befestigungsständer derart ausgestaltet ist, dass die zweite Tragestange ohne sich zu drehen mittels der am zweiten Befestigungsständer durchführbaren Drehbewegung entlang der vertikalen Achse der zweiten Standsäule verschiebbar ist, der erste Befestigungsständer eine Kurbel zur Drehung der ersten Tragestange umfasst. Dies vereinfacht die Konstruktion der Montagevorrichtung und insbesondere die Konstruktion des zweiten Befestigungsständers. Besonders bevorzugt umfasst der erste Befestigungsständer eine lösbar mit dem erste Befestigungsständer verbindbare Kurbel. Die Kurbel kann also bevorzugt vom ersten Befestigungsständer abgenommen werden.

In diesem Zusammenhang ist zudem gemäß einer weiteren bevorzugten Weiterbildung der Erfindung vorgesehen, dass der erste Befestigungsständer ein Getriebe zur Übersetzung einer bevorzugt an der Kurbel ausführbaren Drehbewegung auf die erste Tragestange umfasst. Besonders bevorzugt handelt es sich beim Getriebe um ein Getriebe mit hoher Selbsthemmung, bevorzugt um ein Schneckengetriebe. Dies hat den Vorteil, dass beim Drehen des Lastenrades um seine Längsachse ein Verdrehen des Lastenrades aufgrund eines ungünstigen Schwerpunktes verhindert wird.

Gemäß einer weiteren bevorzugten Weiterbildung ist vorgesehen, dass in der Variante, in der der zweite Befestigungsständer derart ausgestaltet ist, dass die zweite Tragestange mittels der am zweiten Befestigungsständer durchführbaren Drehbewegung in der Ebene parallel zu der die zweite Standsäule enthaltenden Ebene drehbar ist, der zweite Befestigungsständer die Kurbel zur Drehung der Tragestange umfasst. Dies vereinfacht die Konstruktion der Montagevorrichtung.

Gemäß einer weiteren bevorzugten Weiterbildung ist vorgesehen, dass die Tragestange in einer Rastposition senkrecht zur Standsäule fixierbar ist. Dies kann vorzugsweise über eine Sicherungsstifte umfassende Arretiervorrichtung erfolgen, die mittels Formschluss eine Drehbewegung der Tragestange verhindert.

Bei Ausgestaltungen der Montagevorrichtung, bei denen die Tragestange, ohne sich zu drehen, mittels der am Befestigungsständer durchführbaren Drehbewegung entlang der vertikalen Achse der Standsäule verschiebbar ist, ist weiter bevorzugt vorgesehen, dass die Tragestange in einer vordefinierten vertikalen Rastposition fixierbar ist. Dies ermöglicht auf einfache Weise, dass Funktionen des Lastenrades wie Schaltung und/oder Antrieb in angehobener Position auf dem Lastenrad sitzend getestet werden können.

Im Hinblick auf einen sicheren Stand der Montagevorrichtung ist gemäß einer weiteren bevorzugten Weiterbildung der Erfindung vorgesehen, dass der erste und/oder zweite Befestigungsständer einen einklappbaren Standfuß umfasst. Besonders bevorzugt ist der Standfuß mit einer Sicherungsarretierung ausgestattet, um die ausgeklappte Aufstellposition und/oder die eingeklappte Transportposition zu sichern. Zudem kann bevorzugt vorgesehen sein, dass der Standfuß gummierte Stellflächen aufweist. Das Einklappen des Standfußes macht die Montagevorrichtung leicht transportierbar und ermöglicht zudem bei Nichtgebrauch, dass sich die Montagevorrichtung platzsparend zur Seite stellen lässt.

Gemäß einer weiteren bevorzugten Weiterbildung der Erfindung ist vorgesehen, dass der Standfuß wenigstens drei mit der Standsäule verbundene Stützstehlen umfasst. Dies führt zu einem besonders sicheren Stand der Befestigungsständer.

Weiterer technische Merkmale und Vorteile der Montagevorrichtung erschließen sich dem Fachmann aus der Beschreibung des Verfahrens zum Anheben eines Lastenrades und/oder zum Drehen des angehobenen Lastenrades und den beschriebenen Ausführungsbeispielen.

Wie bereits erwähnt betrifft die Erfindung zudem ein Verfahren zum Anheben eines Lastenrades und/oder zum Drehen des angehobenen Lastenrades um seine Längsachse mittels der obigen Montagevorrichtung mit den Schritten
- Anbringen des ersten Befestigungsständers an einer ersten Seite des Lastenrades, wobei die erste Seite des Lastenrades bevorzugt eine Lenkerseite ist, durch Befestigen der Befestigungsmittel der ersten Tragestange an der ersten Seite des Lastenrades,
- Anbringen des zweiten Befestigungsständers an einer der ersten Seite des Lastenrades gegenüberliegenden zweiten Seite, durch Befestigen der Befestigungsmittel der zweiten Tragestange an der zweiten Seite des Lastenrades, und
- Anheben des Lastenrades durch Ausführen einer Drehbewegung am zweiten Befestigungsständer.

Das Verfahren weist den Vorteil auf, dass das Anheben des Lastenrades kraftsparend erfolgt, indem am zweiten Befestigungsständer die Drehbewegung ausgeführt wird.

Bevorzugt ist in Bezug zum ersten Befestigungsständer vorgesehen, dass die erste Tragestange nicht entlang der vertikalen Achse der ersten Standsäule verschiebbar ist, und beim Anbringe des ersten Befestigungsständers an der ersten Seite des Lastenrades, das Lastenrad erst angehoben wird und anschließend an der ersten Tragestange mittels der Befestigungsmittel befestigt wird.

Alternativ ist bevorzugt vorgesehen, dass die erste Tragestange entlang der vertikalen Achse der ersten Standsäule verschiebbar ist, und beim Anbringe des ersten Befestigungsständers an der ersten Seite des Lastenrades, das Lastenrad, ohne es zunächst anzuheben, an der ersten Tragestange mittels der Befestigungsmittel befestigt wird.

Gemäß einer weiteren bevorzugten Weiterbildung der Erfindung ist vorgesehen, dass der zweite Befestigungsständer derart ausgestaltet ist, dass die zweite Tragestange, ohne sich zu drehen, mittels der am zweiten Befestigungsständer durchführbaren Drehbewegung entlang einer vertikalen Achse der zweiten Standsäule verschiebbar ist, und der Schritt Anbringen des zweiten Befestigungsständers an der zweiten Seite des Lastenrades ein Befestigen der zweiten Tragestange mit wenigstens zwei Befestigungsmitteln an der zweiten Seite des Lastenrades bei einer Position der zweiten Tragestange, bei der die zweiter Tragestange im Wesentlichen senkrecht zur zweiten Standsäule ist, umfasst. Bevorzugt wird also nach Befestigen der zweiten Tragestange das Lastenrad entlang der vertikalen Achse nach oben bewegt, wobei dabei die zweite Tragestange in der Position senkrecht zur zweiten Standsäule verbleibt und eine Linearbewegung durchführt.

Gemäß einer weiteren bevorzugten Weiterbildung der Erfindung ist vorgesehen, dass die am zweiten Befestigungsständer ausgeführte Drehbewegung mittels eines Akkuschraubers oder einer Kurbel durchgeführt wird. Der Akkuschrauber weist dabei den Vorteil auf, dass vom Nutzer kaum manuelle Arbeit aufgewendet werden muss.

In einer alternativen Weiterbildung der Erfindung ist vorgesehen, dass der zweite Befestigungsständer derart ausgestaltet ist, dass die zweite Tragestange mittels der am zweiten Befestigungsständer durchführbaren Drehbewegung in der Ebene parallel zu der die zweite Standsäule enthaltenden Ebene drehbar ist, und wenigstens eines der Befestigungsmittel der zweiten Tragestange drehbar an der zweiten Tragestange montiert ist, und
der Schritt Anbringen des zweiten Befestigungsständers an der zweiten Seite des Lastenrades ein Befestigen der zweiten Tragestange mit dem drehbar an der zweiten Tragestange montierten Befestigungsmittel an der zweiten Seite des Lastenrades, bei einer Position der zweiten Tragestange, bei der die zweite Tragestange im Wesentlichen parallel zur zweiten Standsäule ist, umfasst. Bevorzugt wird in diesem Falle also das Lastenrad mittels der Drehbewegung der Tragestange angehoben, die bei Beginn des Anhebens bevorzugt parallel zur zweiten Standsäule ausgerichtet ist. Das drehbar montierte Befestigungsmittel ist zudem bevorzugt am Ende der zweiten Tragestange montiert und die zweite Tragestange ist zum Anheben bevorzugt derart ausgerichtet, dass das drehbar montierte Befestigungsmittel möglichst bodennah ist.

In diesem Zusammenhang ist gemäß einer weiteren bevorzugten Weiterbildung der Erfindung vorgesehen, dass das Verfahren folgende Schritte umfasst:
- Ausführen der Drehbewegung am zweiten Befestigungsständer bis die zweite Tragestange im Wesentlichen senkrecht zur zweiten Standsäule liegt, und
- Befestigen der weiteren Befestigungsmittel der zweiten Tragestange an der zweiten Seite des Lastenrades, bei einer Position der zweiten Tragestange, bei der die zweite Tragestange im Wesentlichen senkrecht zur zweiten Standsäule ist.

Bevorzugt ist das weitere Befestigungsmittel an dem drehbar montierten Befestigungsmittel gegenüberliegenden Ende der zweiten Tragestange montiert. Zudem ist das weitere Befestigungsmittel bevorzugt nicht drehbar an der zweiten Tragestange montiert, sondern verhindert eine Drehung des an der zweiten Tragestange montierten Lastenrades in Bezug zur zweiten Tragestange.

In Bezug zum Drehen des Lastenrades um seine Längsachse ist gemäß einer weiteren bevorzugten Weiterbildung der Erfindung vorgesehen, dass das Verfahren den folgenden Schritt umfasst:
- Drehen des angehobenen Lastenrades um seine Längsachse bevorzugt durch Drehen einer am ersten und/oder zweite Befestigungsständer vorhandenen Kurbel.

Weiterer technische Merkmale und Vorteile des Verfahrens zum Anheben eines Lastenrades und/oder zum Drehen des angehobenen Zwei- oder lassen sich für den Fachmann aus der Beschreibung der Montagevorrichtung und den nachfolgend beschriebenen Ausführungsbeispielen herleiten.

### Kurze Beschreibung der Zeichnungen

Nachfolgend wird die Erfindung unter Bezugnahme auf die anliegenden Zeichnungen anhand eines bevorzugten Ausführungsbeispiels näher erläutert.

In den Zeichnungen zeigt
- Fig. 1: eine schematische Darstellung aus unterschiedlichen Perspektiven eines ersten Befestigungsständers einer Montagevorrichtung, gemäß einem bevorzugten Ausführungsbeispiel der Erfindung,
- Fig. 2: eine schematische Darstellung aus unterschiedlichen Perspektiven eines zweiten Befestigungsständers der Montagevorrichtung aus Figur 1,
- Fig. 3: eine schematische Darstellung eines Standfußes des ersten und zweiten Befestigungsständers aus den Figuren 1 und 2,
- Fig. 4: eine schematische Darstellung der Schritte eines Verfahrens zum Anheben eines Dreirades und zum Drehen des angehobenen Dreirades um seine Längsachse, das mit der in den Figuren 1 und 2 gezeigten Montagevorrichtung durchgeführt wird, gemäß einem bevorzugten Ausführungsbeispiel der Erfindung, und
- Fig. 5: eine schematische Darstellung der Schritte eines Verfahrens zum Anheben eines Dreirades und zum Drehen des angehobenen Dreirades um seine Längsachse, das mit einer Montagevorrichtung gemäß einem weiteren bevorzugten Ausführungsbeispiel der Erfindung ausgeführt wird.

### Detaillierte Beschreibung der Ausführungsbeispiele

Die beschriebenen Ausführungsbeispiele sind lediglich Beispiele, die im Rahmen der Ansprüche auf vielfältige Weise modifiziert und/oder ergänzt werden können. Jedes Merkmal, das für ein bestimmtes Ausführungsbeispiel beschrieben wurde, kann eigenständig oder in Kombination mit anderen Merkmalen in einem beliebigen anderen Ausführungsbeispiel genutzt werden. Jedes Merkmal, dass für ein Ausführungsbeispiel einer bestimmten Kategorie beschrieben wurde, kann auch in entsprechender Weise in einem Ausführungsbeispiel einer anderen Kategorie eingesetzt werden.

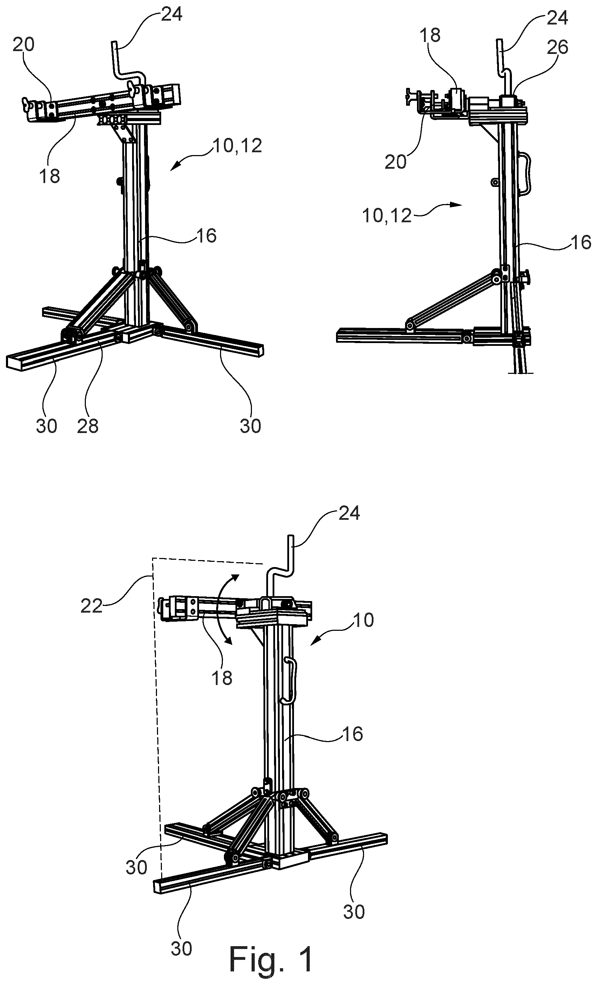

Figur 1 zeigt eine schematische Darstellung aus unterschiedlichen Perspektiven eines ersten Befestigungsständers 10 einer Montagevorrichtung 12, gemäß einem bevorzugten Ausführungsbeispiel der Erfindung. Im Folgenden wird am Beispiel der Montagevorrichtung 12 für ein dreirädriges Lastenrad das Prinzip der Erfindung illustriert. Der Fachmann kann das in diesem Ausführungsbeispiel für das Dreirad illustrierte Prinzip der Montagevorrichtung 12 auch auf andere Lastenräder wie beispielsweise zweirädrige Lastenräder oder vierrädrige Lastenräder anwenden. Zudem kann das Zwei- Drei- oder Vierrad elektrisiert oder motorisiert sein.

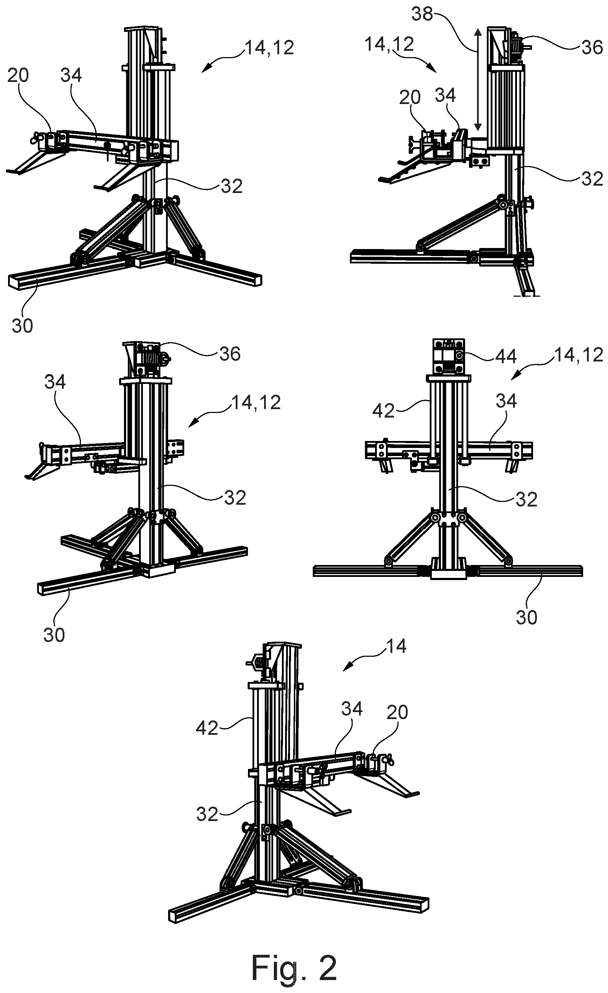

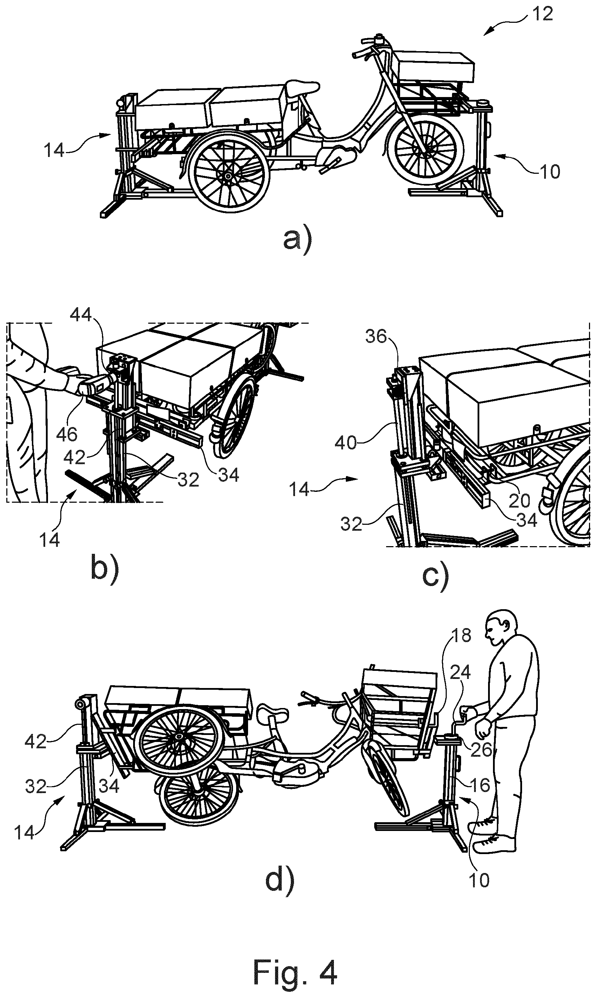

Die Montagevorrichtung 12 umfasst den in Figur 1 dargestellten ersten Befestigungsständer 12 zum Anbringen an eine Lenkerseite des Dreirades, und einen in Figur 2 dargestellten zweiten Befestigungsständer 14 zum Anbringen an einer der Lenkerseite des Dreirades gegenüberliegenden Rückseite. Das Dreirad ist in den Figuren 1 bis 3 selbst nicht gezeigt, allerdings in Figur 4 abgebildet.

Wie in Figur 1 zu erkennen ist, weist der erste Befestigungsständer 10 eine vertikal verlaufende erste Standsäule 16 und eine mit der ersten Standsäule 16 drehbar verbundene erste Tragestange 18 auf. Die erste Tragestange 18 weist zum Befestigen des Dreirades an der ersten Tragestange 18 Befestigungsmittel 20 auf. Die Befestigungsmittel 20 sind vorliegend als U-förmige Aufnahmegabeln, die zur Sicherungsarretierung Gewindestifte aufweisen, ausgestaltet.

Die erste Tragestange 18 lässt sich in einer Ebene 22 parallel zu einer die erste Standsäule 16 enthaltenden Ebene in Bezug zur ersten Standsäule 16 drehen. Zum Drehen der ersten Tragestange 18 weist der erste Befestigungsständer 16 eine Kurbel 24 und ein Getriebe 26 mit hoher Selbsthemmung auf - vorliegend ein Schneckengetriebe.

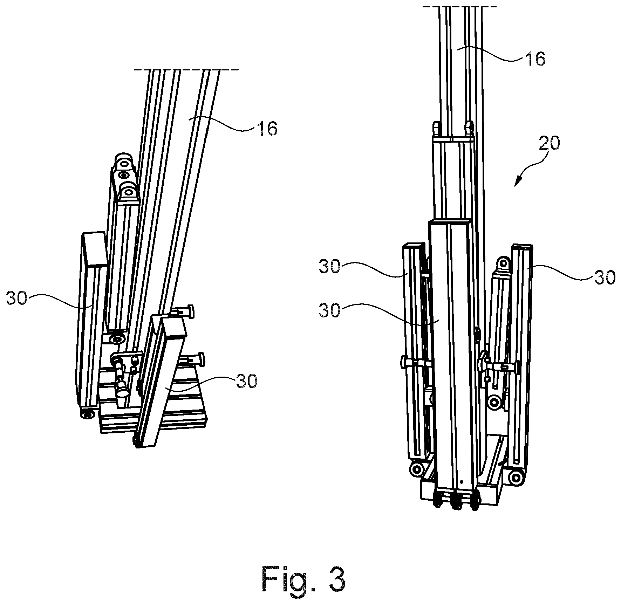

Der erste Befestigungsständer 10 wie auch der in Figur 2 gezeigte zweite Befestigungsständer 14 weisen beide einen einklappbaren Standfuß 28 auf (siehe Figur 3), der drei mit der jeweiligen Standsäule 16 verbundene Stützstehlen 30 umfasst. Wie in Figur 3 zu erkennen ist, lassen sich die drei Stützstehlen 30 in eine Position bringen, in der sie parallel zur Standsäule 16 verlaufen.

Wie schon erwähnt zeigt Figur 2 eine schematische Darstellung aus unterschiedlichen Perspektiven des zweiten Befestigungsständers 14 der Montagevorrichtung 12, gemäß einem bevorzugten Ausführungsbeispiel der Erfindung. Der zweiter Befestigungsständer 14 ist zum Anbringen an der Rückseite des Dreirades ausgestaltet.

Dafür weist der zweite Befestigungsständer 14 analog zum ersten Befestigungsständer 10 eine vertikal verlaufende zweite Standsäule 32 und eine mit der zweiten Standsäule 32 drehbar verbundene zweite Tragestange 34 auf. Die zweite Tragestange 34 weist zum Befestigen des Dreirades an der zweiten Tragestange 34 ebenfalls als U-förmige Aufnahmegabeln ausgestaltete Befestigungsmittel 20 auf.

Zudem weist der zweite Befestigungsständer 14 zum Anheben des Dreirades ein mechanisches Getriebe 36 auf und ist derart ausgestaltet, dass das an der zweiten Tragestange 34 befestigtes Dreirad durch eine am zweiten Befestigungsständer 14 durchführbaren Drehbewegung anhebbar ist. In diesem Ausführungsbeispiel ist dafür der zweite Befestigungsständer 14 derart ausgestaltet, dass die zweite Tragestange 34 ohne sich zu drehen mittels der am zweiten Befestigungsständer durchführbaren Drehbewegung entlang einer vertikalen Achse 38 der zweiten Standsäule 32 verschiebbar ist. Im Gegensatz dazu ist bei dem ersten Befestigungsständer 10 die erste Tragestange 18 in Bezug zur ersten Standsäule 16 nicht vertikal verschiebbar.

Konkret, was besser in Figur 4 zu erkennen ist, weist der zweite Befestigungsständer 14 zum vertikalen Versschieben der Tragestange 34 ein Schneckengetriebe 36 und eine Gewindespindel 40 auf, die die Drehbewegung in die axiale Bewegung umgewandelt. Die axiale Bewegung wird zudem über ein Linearführung 42 geführt. Zum Ausführen der Drehbewegung weist der zweite Befestigungsständer 14 zudem eine Aufnahmevorrichtung 44 zur Aufnahme eines Schaubkopfes eines Akkuschraubers 46 auf. Derart muss die Drehbewegung zum Anheben des Dreirades nicht manuell vom Nutzer ausgeführt werden.

Figur 4 zeigt eine schematische Darstellung der Schritte eines Verfahrens zum Anheben des Dreirades und zum Drehen des angehobenen Dreirades um seine Längsachse, das mit der Montagevorrichtung 12 aus den Figuren 1 und 2 durchgeführt wird, gemäß einem bevorzugten Ausführungsbeispiel der Erfindung.

Mit Bezug zu Figur 4a) wird in einem ersten Schritt des Verfahrens der ersten Befestigungsständer 10 an der Lenkerseite des Dreirades befestigt, indem das Dreirad manuell angehoben wird und mit den Befestigungsmitteln 20 mit der ersten Tragestange 18 verbunden wird. Die vorgegebene Höhe der ersten Tragestange 18 ist derart auf die Höhe des Dreirades abgestimmt, dass nach Befestigung das Vorderrad des Dreirades keinen Kontakt mehr zum Boden aufweist.

In einem nächsten Schritt des Verfahrens und immer noch in Bezug zu Figur 4a) wird der zweite Befestigungsständer 14 an der Rückseite des Dreirades angebracht, indem die Befestigungsmittel 20 der zweiten Tragestange 34 mit dem Dreirad verbunden werden. Dafür muss das Dreirad nicht angehoben werden.

Mit Bezug zu den Figuren 4b) und 4c) wird in einem darauffolgenden Schritt des Verfahrens das Dreirad durch Ausführen einer Drehbewegung am zweiten Befestigungsständer 14 angehoben. Dies erfolgt vorliegend mittel des Akkuschraubers 46.

Daraufhin wird das Dreirad, wie in Figur 4d) gezeigt in einem weiteren Schritt des Verfahrens um seine Längsachse gedreht, indem an der lösbar mit dem ersten Befestigungsständer 12 verbundenen Kurbel 24 gedreht wird.

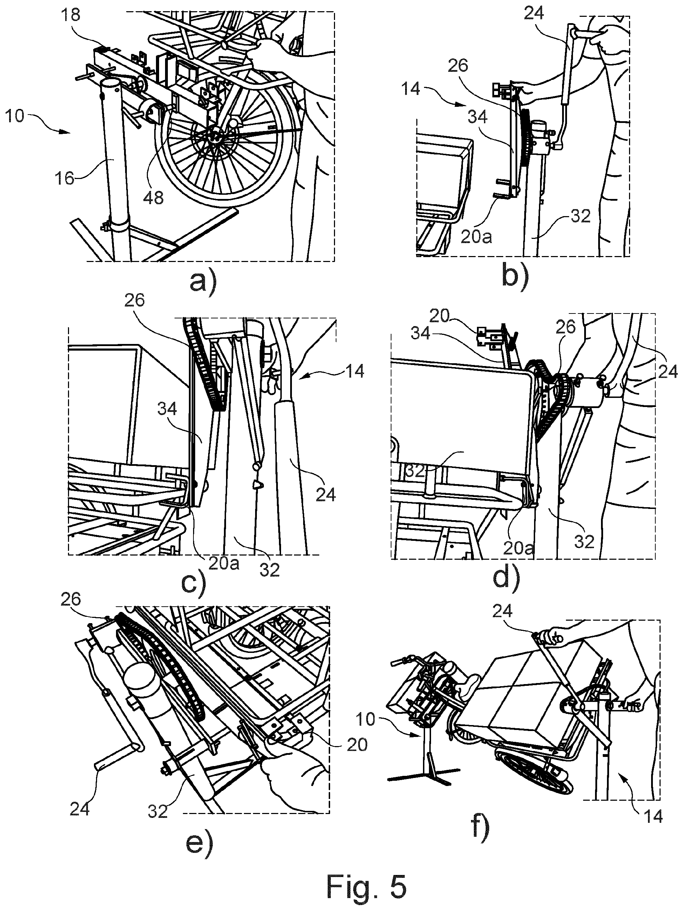

Figur 5 zeigt eine schematische Darstellung der Schritte eines Verfahrens zum Anheben des Dreirades und zum Drehen des angehobenen Dreirades um seine Längsachse, das mit einer Montagevorrichtung 12, gemäß einem weiteren bevorzugten Ausführungsbeispiel der Erfindung, ausgeführt wird.

Zunächst wird auf die Unterschiede der in diesem Ausführungsbeispiel verwendeten Montagevorrichtung 12 im Vergleich zu der in den Figuren 1 bis 4 gezeigten Montagevorrichtung 12 eingegangen. Der in Figur 5a) dargestellte erste Befestigungsständer 10 weist eine erste Standsäule 16 und eine an der ersten Standsäule 16 drehbar gelagerte erste Tragestange 18 auf. Im Gegensatz zu dem in Figur 1 gezeigten Ausführungsbeispiel weist der in Figur 5a) dargestellte erste Befestigungsständer 10 kein Getriebe auf. Dafür ist in Figur 5a) eine als Sicherungsstift 48 ausgestaltete Arretiervorrichtung zu erkennen, die bei Bedarf die erste Tragestange 18 in einer Position senkrecht zur ersten Standsäule 16 arretiert.

In Figur 5b) ist der zweite Befestigungsständer 14 dargestellt, der analog zum in Figur 2 dargestellten Ausführungsbeispiel nebst der zweiten Standsäule 32 und der drehbaren zweiten Tragestange 34 zum Anheben des Dreirades ein mechanisches Getriebe 36 aufweist, wobei das Getriebe 36 vorliegend als Kettengetriebe ausgestaltet ist. Durch Drehung an der Kurbel 24 lässt sich die zweite Tragestange 34 in der Ebene parallel zu der die zweite Standsäule 32 enthaltenden Ebene drehen.

Wie gut in den Figuren 5b) bis 5f) zu erkennen ist, ist wenigstens eines der Befestigungsmittel 20a der zweiten Tragestange 34 drehbar an der zweiten Tragestange 34 montiert. Dies ermöglicht, dass mittels des drehbaren Befestigungsmittels 20a an der zweiten Tragestange 34 befestigte Dreirad, durch Ausführen der Drehbewegung an der Kurbel 24 anzuheben.

Im Hinblick auf das Verfahren zum Anheben des Dreirades und zum Drehen des angehobenen Dreirades um seine Längsachse wird in diesem in Figur 5 gezeigten Ausführungsbeispiel also mit Bezug zu Figur 5a) in einem ersten Schritt zunächst der ersten Befestigungsständer 10 an der Lenkerseite des Dreirades befestigt, indem das Dreirad manuell angehoben wird und mit den Befestigungsmitteln 20 mit der ersten Tragestange 18 verbunden wird. Dafür ist die erste Tragestange 18 mittels der Arretiervorrichtung 48 in der Position senkrecht zur ersten Standsäule 16 arretiert. Die vorgegebene Höhe der ersten Tragestange 18 ist zudem derart auf die Höhe des Dreirades abgestimmt, dass nach Befestigung das Vorderrad des Dreirades keinen Kontakt mehr zum Boden aufweist.

In einem nächsten Schritt des Verfahrens und in Bezug zu Figur 5b) bis 5e) wird der zweite Befestigungsständer 14 an der Rückseite des Dreirades angebracht, indem die zweite Tragestange 34 in einer Position, bei der die zweite Tragestange 34 im Wesentlichen parallel zur zweiten Standsäule 32 ist, wie in Figur 5c) gezeigt, mittels des drehbar montierten Befestigungsmittels 20a mit dem Dreirad verbunden wird. Dafür muss das Dreirad nicht angehoben werden.

Mit Bezug zu Figur 5d) wird in einem darauffolgenden Schritt des Verfahrens das Dreirad durch Ausführen der Drehbewegung an der Kurbel 24 angehoben. Konkret wird mit der Kurbel 24 solange eine Drehbewegung durchgeführt, bis die zweite Tragestange 34 im Wesentlichen senkrecht zur zweiten Standsäule 32 liegt. In dieser Position werden dann die weiteren Befestigungsmittel 20 der zweiten Tragestange 34 an dem Dreirad befestigt.

In Bezug zu Figur 5e) kann dann das Dreirad nach Lösen der Arretiervorrichtung 48 am ersten Befestigungsständer 10 durch Drehung an der Kurbel 24 am zweiten Befestigungsständer 14 um seine Längsachse gedreht werden.

### Bezugszeichenliste

| | |
|---|---|
| Erster Befestigungsständer | 10 |
| Montagevorrichtung | 12 |
| Zweiter Befestigungsständer | 14 |
| Erste Standsäule | 16 |
| Erste Tragestange | 18 |
| Befestigungsmittel | 20 |
| Ebene | 22 |
| Kurbel | 24 |
| Getriebe | 26 |
| Standfuß | 28 |
| Stützstehlen | 30 |
| Zweite Standsäule | 32 |
| Zweite Tragestange | 34 |
| Mechanisches Getriebe | 36 |
| Vertikale Achse | 38 |
| Gewindespindel | 40 |
| Linearführung | 42 |
| Aufnahmevorrichtung | 44 |
| Akkuschrauber | 46 |
| Arretiervorrichtung, Sicherheitsstift | 48 |

## Patentansprüche

1. Montagevorrichtung (12) für ein Lastenrad umfassend einen ersten Befestigungsständer (10) zum Anbringen an eine erste Seite des Lastenrades, wobei die erste Seite des Lastenrades bevorzugt eine Lenkerseite ist,
wobei der erste Befestigungsständer (10) eine vertikal verlaufende erste Standsäule (16) und eine mit der ersten Standsäule (16) drehbar verbundene erste Tragestange (18) umfasst, wobei die erste Tragestange (18) Befestigungsmittel (20) zum Befestigen der ersten Tragestange (18) an der ersten Seite des Lastenrades umfasst, und wobei die erste Tragestange (18) in einer Ebene (22) parallel zu einer die erste Standsäule (16) enthaltenden Ebene in Bezug zur ersten Standsäule (16) drehbar ist,
**dadurch gekennzeichnet, dass** die Montagevorrichtung einen zweiten Befestigungsständer (14) zum Anbringen an eine der ersten Seite gegenüberliegende zweite Seite des Lastenrades umfasst,
wobei der zweite Befestigungsständer (14) eine vertikal verlaufende zweite Standsäule (32) und eine mit der zweiten Standsäule (32) drehbar verbundene zweite Tragestange (34) umfasst, wobei die zweite Tragestange (34) Befestigungsmittel (20) zum Befestigen der zweiten Tragestange (34) an der zweiten Seite des Lastenrades umfasst, und wobei die zweite Tragestange (34) in einer Ebene (22) parallel zu einer die zweite Standsäule (32) enthaltenden Ebene in Bezug zur zweiten Standsäule (32) drehbar ist,
und wobei der zweite Befestigungsständer (14) zum Anheben des Lastenrades ein mechanisches Getriebe (36) umfasst und derart ausgestaltet ist, dass ein an der zweiten Tragestange (34) befestigtes Lastenrad durch eine am zweiten Befestigungsständer (14) durchführbaren Drehbewegung anhebbar ist.

2. Montagevorrichtung (12) nach Anspruch 1, wobei der zweite Befestigungsständer (14) zum Anheben des Lastenrades derart ausgestaltet ist, dass die zweite Tragestange (34) ohne sich zu drehen mittels der am zweiten Befestigungsständer (14) durchführbaren Drehbewegung entlang einer vertikalen Achse (38) der zweiten Standsäule (32) verschiebbar ist, oder
wobei der zweite Befestigungsständer (14) zum Anheben des Lastenrades derart ausgestaltet ist, dass die zweite Tragestange (34) mittels der am zweiten Befestigungsständer (14) durchführbaren Drehbewegung in der Ebene (22) parallel zu der die zweite Standsäule (32) enthaltenden Ebene drehbar ist, und wenigstens eines der Befestigungsmittel (20a) der zweiten Tragestange (34) drehbar an der zweiten Tragestange (34) montiert ist.

3. Montagevorrichtung (12) nach dem vorhergehenden Anspruch, wobei der zweite Befestigungsständer (14) zum Verschieben der zweiten Tragestange (34) entlang der vertikalen Achse (38) ein Schraubgetriebe oder Schneckengetriebe umfasst.

4. Montagevorrichtung (12) nach Anspruch 2, wobei der zweite Befestigungsständer (14) zum Drehen der zweiten Tragestange (34) ein Kettengetriebe umfasst.

5. Montagevorrichtung (12) nach einem der vorhergehenden Ansprüche, wobei die erste Tragestange (18) nicht entlang einer vertikalen Achse der ersten Standsäule (16) verschiebbar ist, und wobei die erste Tragestange (18) derart an der ersten Standsäule (16) montiert ist, dass ein an der senkrecht zur ersten Standsäule (16) ausgerichteten Tragestange (18) befestigtes Lastenrad wenigstens anteilig angehoben ist, oder
wobei die erste Tragestange (18) entlang einer vertikalen Achse der ersten Standsäule (16) verschiebbar ist.

6. Montagevorrichtung (12) nach einem der vorhergehenden Ansprüche, wobei der erste und/oder zweite Befestigungsständer (10, 14) eine Kurbel (24) zur Drehung der Tragestange (18, 34) umfasst.

7. Montagevorrichtung (12) nach einem der vorhergehenden Ansprüche, wobei der erste Befestigungsständer (10) ein Getriebe (26) zur Übersetzung einer, bevorzugt an einer Kurbel (24) ausführbaren Drehbewegung auf die erste Tragestange (18) umfasst.

8. Montagevorrichtung (12) nach einem der vorhergehenden Ansprüche, wobei die Tragestange (18, 32) in einer Rastposition senkrecht zur Standsäule (16, 32) fixierbar ist.

9. Montagevorrichtung (12) nach einem der vorhergehenden Ansprüche, wobei der erste und/oder zweite Befestigungsständer (10, 14) einen einklappbaren Standfuß (28) umfasst.

10. Montagevorrichtung (12) nach dem vorhergehenden Anspruch, wobei der Standfuß (28) wenigstens drei mit der Standsäule (16, 32) verbundene Stützstehlen (30) umfasst.

11. Verfahren zum Anheben eines Lastenrades und/oder zum Drehen des angehobenen Lastenrades um seine Längsachse mittels einer Montagevorrichtung (12) nach einem der Ansprüche 1 bis 10 mit den Schritten
- Anbringen des ersten Befestigungsständers (10) an einer ersten Seite des Lastenrades, wobei die erste Seite des Lastenrades bevorzugt eine Lenkerseite ist, durch Befestigen der Befestigungsmittel (20) der ersten Tragestange (18) an der ersten Seite des Lastenrades,
- Anbringen des zweiten Befestigungsständers (14) an einer der ersten Seite des Lastenrades gegenüberliegenden zweiten Seite, durch Befestigen der Befestigungsmittel (20) der zweiten Tragestange (34) an der zweiten Seite des Lastenrades, und
- Anheben des Lastenrades durch Ausführen einer Drehbewegung am zweiten Befestigungsständer (14).

12. Verfahren nach Anspruch 11, wobei der zweite Befestigungsständer (14) derart ausgestaltet ist, dass die zweite Tragestange (34) ohne sich zu drehen mittels der am zweiten Befestigungsständer (14) durchführbaren Drehbewegung entlang einer vertikalen Achse (38) der zweiten Standsäule (32) verschiebbar ist, und
der Schritt Anbringen des zweiten Befestigungsständers (14) an der zweiten Seite des Lastenrades ein Befestigen der zweiten Tragestange (34) mit wenigstens zwei Befestigungsmitteln (20) an der zweiten Seite des Lastenrades bei einer Position der zweiten Tragestange (34), bei der die zweiter Tragestange (34) im Wesentlichen senkrecht zur zweiten Standsäule (32) ist, umfasst.

13. Verfahren nach Anspruch 12, wobei die am zweiten Befestigungsständer (14) ausgeführte Drehbewegung mittels eines Akkuschraubers (46) oder einer Kurbel (24) durchgeführt wird.

14. Verfahren nach Anspruch 11, wobei der zweite Befestigungsständer (14) derart ausgestaltet ist, dass die zweite Tragestange (34) mittels der am zweiten Befestigungsständer (14) durchführbaren Drehbewegung in der Ebene (22) parallel zu der die zweite Standsäule (32) enthaltenden Ebene drehbar ist, und wenigstens eines der Befestigungsmittel (20a) der zweiten Tragestange (34) drehbar an der zweiten Tragestange (34) montiert ist,
der Schritt Anbringen des zweiten Befestigungsständers (14) an der zweiten Seite des Lastenrades ein Befestigen der zweiten Tragestange (34) mit dem drehbar an der zweiten Tragestange (34) montierten Befestigungsmittel (20a) an der zweiten Seite des Lastenrades, bei einer Position der zweiten Tragestange (34), bei der die zweite Tragestange (34) im Wesentlichen parallel zur zweiten Standsäule (32) ist, umfasst.

15. Verfahren nach Anspruch 14 umfassend folgende Schritte:
- Ausführen der Drehbewegung am zweiten Befestigungsständer (14) bis die zweite Tragestange (34) im Wesentlichen senkrecht zur zweiten Standsäule (32) liegt und
- Befestigen der weiteren Befestigungsmittel (20) der zweiten Tragestange (34) an der zweiten Seite des Lastenrades, bei einer Position der zweiten Tragestange (34), bei der die zweite Tragestange (34) im Wesentlichen senkrecht zur zweiten Standsäule (32) ist.

16. Verfahren nach einem der vorhergehenden Ansprüche umfassend den Schritt
- Drehen des angehobenen Lastenrades um seine Längsachse bevorzugt durch Drehen einer am ersten und/oder zweite Befestigungsständer (10, 14) vorhandenen Kurbel (24).

## Claims

1. Mounting device (12) for a cargo bike comprising a first fastening stand (10) for attaching to a first side of the cargo bike, wherein the first side of the cargo bike is preferably a handlebar side,
wherein the first fastening stand (10) comprises a vertically running first upright column (16) and a first support rod (18) which is rotatably connected to the first upright column (16), wherein the first support rod (18) comprises fastening means (20) for fastening the first support rod (18) to the first side of the cargo bike, and wherein the first support rod (18) is rotatable in relation to the first upright column (16) in a plane (22) parallel to a plane containing the first upright column (16), **characterized in that** the mounting device comprises a second fastening stand (14) for attaching to a second side of the cargo bike lying opposite the first side,
wherein the second fastening stand (14) comprises a vertically running second upright column (32) and a second support rod (34) which is rotatably connected to the second upright column (32), wherein the second support rod (34) comprises fastening means (20) for fastening the second support rod (34) to the second side of the cargo bike, and wherein the second support rod (34) is rotatable in relation to the second upright column (32) in a plane (22) parallel to a plane containing the second upright column (32),
and wherein the second fastening stand (14) comprises a mechanical gear mechanism (36) for lifting the cargo bike, and is designed such that a cargo bike fastened to the second support rod (34) can be lifted by a rotational movement which can be carried out on the second fastening stand (14).

2. Mounting device (12) according to Claim 1, wherein the second fastening stand (14) for lifting the cargo bike is designed such that the second support rod (34) can be moved without rotating by means of the rotational movement, which can be carried out on the second fastening stand (14), along a vertical axis (38) of the second upright column (32), or
wherein the second fastening stand (14) for lifting the cargo bike is designed such that the second support rod (34) is rotatable in the plane (22) parallel to the plane containing the second upright column (32) by means of the rotational movement, which can be carried out on the second fastening stand (14), and at least one of the fastening means (20a) of the second support rod (34) is mounted rotatably on the second support rod (34).

3. Mounting device (12) according to the preceding claim, wherein the second fastening stand (14) for moving the second support rod (34) along the vertical axis (38) comprises a helical gear or worm gear.

4. Mounting device (12) according to Claim 2, wherein the second fastening stand (14) for rotating the second support rod (34) comprises a chain gear.

5. Mounting device (12) according to any one of the preceding claims, wherein the first support rod (18) is not movable along a vertical axis of the first upright column (16), and wherein the first support rod (18) is mounted on the first upright column (16) such that a cargo bike fastened to the support rod (18) oriented perpendicularly with respect to the first upright column (16) is lifted at least partially, or
wherein the first support rod (18) is movable along a vertical axis of the first upright column (16).

6. Mounting device (12) according to any one of the preceding claims, wherein the first and/or second fastening stand (10, 14) comprise/comprises a crank (24) for rotating the support rod (18, 34).

7. Mounting device (12) according to any one of the preceding claims, wherein the first fastening stand (10) comprises a gear mechanism (26) for transmitting a rotational movement, which can preferably be carried out at a crank (24), to the first support rod (18).

8. Mounting device (12) according to any one of the preceding claims, wherein the support rod (18, 32) can be fixed in a latching position perpendicularly with respect to the upright column (16, 32).

9. Mounting device (12) according to any one of the preceding claims, wherein the first and/or second fastening stand (10, 14) comprise/comprises a foldable base (28).

10. Mounting device (12) according to the preceding claim, wherein the base (28) comprises at least three supports (30) connected to the upright column (16, 32).

11. Method for lifting a cargo bike and/or for rotating the lifted cargo bike about its longitudinal axis by means of a mounting device (12) according to any one of Claims 1 to 10, with the steps
- attaching the first fastening stand (10) to a first side of the cargo bike, wherein the first side of the cargo bike is preferably a handlebar side, by fastening the fastening means (20) of the first support rod (18) to the first side of the cargo bike,
- attaching the second fastening stand (14) to a second side lying opposite the first side of the cargo bike by fastening the fastening means (20) of the second support rod (34) to the second side of the cargo bike, and
- lifting the cargo bike by carrying out a rotational movement on the second fastening stand (14).

12. Method according to Claim 11, wherein the second fastening stand (14) is designed such that the second support rod (34) can be moved without rotating by means of the rotational movement, which can be carried out on the second fastening stand (14), along a vertical axis (38) of the second upright column (32), and
the step of attaching the second fastening stand (14) to the second side of the cargo bike comprises fastening the second support rod (34) by way of at least two fastening means (20) to the second side of the cargo bike in a position of the second support rod (34), in which position the second support rod (34) is substantially perpendicular with respect to the second upright column (32).

13. Method according to Claim 12, wherein the rotational movement carried out on the second fastening stand (14) is carried out by means of a cordless screwdriver (46) or a crank (24).

14. Method according to Claim 11, wherein the second fastening stand (14) is designed such that the second support rod (34) is rotatable in the plane (22) parallel to the plane containing the second upright column (32) by means of the rotational movement which can be carried out on the second fastening stand (14), and at least one of the fastening means (20a) of the second support rod (34) is mounted rotatably on the second support rod (34), the step of attaching the second fastening stand (14) to the second side of the cargo bike comprises fastening the second support rod (34) to the second side of the cargo bike by way of the fastening means (20a) mounted rotatably on the second support rod (34), in a position of the second support rod (34), in which position the second support rod (34) is substantially parallel to the second upright column (32).

15. Method according to Claim 14, comprising the following steps:
- carrying out the rotational movement on the second fastening stand (14) until the second support rod (34) lies substantially perpendicularly with respect to the second upright column (32) and
- fastening the further fastening means (20) of the second support rod (34) to the second side of the cargo bike, in a position of the second support rod (34), in which position the second support rod (34) is substantially perpendicular with respect to the second upright column (32).

16. Method according to any one of the preceding claims, comprising the step:
- rotating the lifted cargo bike about its longitudinal axis preferably by rotating a crank (24) present on the first and/or second fastening stand (10, 14).

## Revendications

1. Dispositif de montage (12) pour un vélo-cargo, comprenant un premier montant de fixation (10) pour l'attache à un premier côté du vélo-cargo, le premier côté du vélo-cargo étant de préférence un côté guidon,
dans lequel le premier montant de fixation (10) comprend une première colonne de soutien (16) s'étendant verticalement et une première barre de support (18) reliée de façon à pouvoir tourner à la première colonne de soutien (16), dans lequel la première barre de support (18) comprend des moyens de fixation (20) pour la fixation de la première barre de support (18) au premier côté du vélo-cargo, et dans lequel la première barre de support (18) peut tourner par rapport à la première colonne de soutien (16) dans un plan (22) parallèle à un plan contenant la première colonne de soutien (16), **caractérisé en ce que** le dispositif de montage comprend un deuxième montant de fixation (14) pour l'attache à un deuxième côté du vélo-cargo opposé au premier côté,
dans lequel le deuxième montant de fixation (14) comprend une deuxième colonne de soutien (32) s'étendant verticalement et une deuxième barre de support (34) reliée de façon à pouvoir tourner à la deuxième colonne de soutien (32), dans lequel la deuxième barre de support (34) comprend des moyens de fixation (20) pour la fixation de la deuxième barre de support (34) au deuxième côté du vélo-cargo, et dans lequel la deuxième barre de support (34) peut tourner par rapport à la deuxième colonne de soutien (32) dans un plan (22) parallèle à un plan contenant la deuxième colonne de soutien (32),
et dans lequel le deuxième montant de fixation (14) comprend une transmission mécanique (36) pour le soulèvement du vélo-cargo et est conçu de telle sorte qu'un vélo-cargo fixé à la deuxième barre de support (34) peut être soulevé par un mouvement de rotation pouvant être effectué au niveau du deuxième montant de fixation (14).

2. Dispositif de montage (12) selon la revendication 1, dans lequel le deuxième montant de fixation (14) pour le soulèvement du vélo-cargo est conçu de telle sorte que la deuxième barre de support (34) peut être déplacée le long d'un axe vertical (38) de la deuxième colonne de soutien (32) sans tourner grâce au mouvement de rotation pouvant être effectué au niveau du deuxième montant de fixation (14), ou
dans lequel le deuxième montant de fixation (14) pour le soulèvement du vélo-cargo est conçu de telle sorte que la deuxième barre de support (34) peut tourner dans le plan (22) parallèle au plan contenant la deuxième colonne de soutien (32) grâce au mouvement de rotation pouvant être effectué au niveau du deuxième montant de fixation (14), et au moins l'un des moyens de fixation (20a) de la deuxième barre de support (34) est monté de façon à pouvoir tourner sur la deuxième barre de support (34).

3. Dispositif de montage (12) selon la revendication précédente, dans lequel le deuxième montant de fixation (14) comprend une transmission à vis ou une transmission à vis sans fin pour le déplacement de la deuxième barre de support (34) le long de l'axe vertical (38).

4. Dispositif de montage (12) selon la revendication 2, dans lequel le deuxième montant de fixation (14) comprend une transmission à chaîne pour faire tourner la deuxième barre de support (34).

5. Dispositif de montage (12) selon l'une des revendications précédentes, dans lequel la première barre de support (18) ne peut pas être déplacée le long d'un axe vertical de la première colonne de soutien (16), et dans lequel la première barre de support (18) est montée sur la première colonne de soutien (16) de telle sorte qu'un vélo-cargo fixé à la barre de support (18) orientée perpendiculairement à la première colonne de soutien (16) est soulevé au moins partiellement, ou
dans lequel la première barre de support (18) peut être déplacée le long d'un axe vertical de la première colonne de soutien (16).

6. Dispositif de montage (12) selon l'une des revendications précédentes, dans lequel le premier et/ou le deuxième montant de fixation (10, 14) comprennent une manivelle (24) pour faire tourner la barre de support (18, 34).

7. Dispositif de montage (12) selon l'une des revendications précédentes, dans lequel le premier montant de fixation (10) comprend une transmission (26) pour la transmission d'un mouvement de rotation pouvant être effectué de préférence au niveau d'une manivelle (24) à la première barre de support (18).

8. Dispositif de montage (12) selon l'une des revendications précédentes, dans lequel la barre de support (18, 32) peut être fixée dans une position d'encliquetage perpendiculairement à la colonne de soutien (16, 32).

9. Dispositif de montage (12) selon l'une des revendications précédentes, dans lequel le premier et/ou le deuxième montant de fixation (10, 14) comprennent un pied repliable (28).

10. Dispositif de montage (12) selon la revendication précédente, dans lequel le pied (28) comprend au moins trois éléments d'appui (30) reliés à la colonne de soutien (16, 32).

11. Procédé pour soulever un vélo-cargo et/ou pour faire tourner le vélo-cargo soulevé autour de son axe longitudinal au moyen d'un dispositif de montage (12) selon l'une des revendications 1 à 10 comportant les étapes suivantes
- attacher le premier montant de fixation (10) à un premier côté du vélo-cargo, dans lequel le premier côté du vélo-cargo est de préférence un côté guidon, par fixation des moyens de fixation (20) de la première barre de support (18) au premier côté du vélo-cargo,
- attacher le deuxième montant de fixation (14) à un deuxième côté opposé au premier côté du vélo-cargo, par fixation des moyens de fixation (20) de la deuxième barre de support (34) au deuxième côté du vélo-cargo, et
- soulèvement du vélo-cargo en effectuant un mouvement de rotation au niveau du deuxième montant de fixation (14).

12. Procédé selon la revendication 11, dans lequel le deuxième montant de fixation (14) est conçu de telle sorte que la deuxième barre de support (34) peut être déplacée le long d'un axe vertical (38) de la deuxième colonne de soutien (32) sans tourner grâce au mouvement de rotation pouvant être effectué au niveau du deuxième montant de fixation (14), et
l'étape d'attache du deuxième montant de fixation (14) au deuxième côté du vélo-cargo comprend une fixation de la deuxième barre de support (34), à l'aide d'au moins deux moyens de fixation (20), sur le deuxième côté du vélo-cargo dans une position de la deuxième barre de support (34) dans laquelle la deuxième barre de support (34) est sensiblement perpendiculaire à la deuxième colonne de soutien (32).

13. Procédé selon la revendication 12, dans lequel le mouvement de rotation effectué au niveau du deuxième montant de fixation (14) est effectué à l'aide **d'une** visseuse sans fil (46) ou d'une manivelle (24).

14. Procédé selon la revendication 11, dans lequel le deuxième montant de fixation (14) est conçu de telle sorte que la deuxième barre de support (34) peut tourner dans le plan (22) parallèle au plan contenant la deuxième colonne de soutien (32) grâce au mouvement de rotation pouvant être effectué au niveau du deuxième montant de fixation (14), et au moins l'un des moyens de fixation (20a) de la deuxième barre de support (34) est monté de façon à pouvoir tourner sur la deuxième barre de support (34),
l'étape d'attache du deuxième montant de fixation (14) au deuxième côté du vélo-cargo comprend une fixation de la deuxième barre de support (34), à l'aide du moyen de fixation (20a) monté de façon à pouvoir tourner sur la deuxième barre de support (34), sur le deuxième côté du vélo-cargo dans une position de la deuxième barre de support (34) dans laquelle la deuxième barre de support (34) est sensiblement parallèle à la deuxième colonne de soutien (32).

15. Procédé selon la revendication 14, comprenant les étapes suivantes :
- effectuer le mouvement de rotation au niveau du deuxième montant de fixation (14) jusqu'à ce que la deuxième barre de support (34) se situe sensiblement perpendiculairement à la deuxième colonne de soutien (32) et
- fixer l'autre moyen de fixation (20) de la deuxième barre de support (34) au deuxième côté du vélo-cargo, dans une position de la deuxième barre de support (34) dans laquelle la deuxième barre de support (34) est sensiblement perpendiculaire à la deuxième colonne de soutien (32).

16. Procédé selon l'une des revendications précédentes, comprenant l'étape suivante
- faire tourner le vélo-cargo soulevé autour de son axe longitudinal de préférence en faisant tourner une manivelle (24) présente sur le premier et/ou le deuxième montant de fixation (10, 14).
